# EUROPÄISCHE PATENTANMELDUNG

(11) **EP 4 704 161 A1**
(43) Veröffentlichungstag der Anmeldung: **04.03.2026**
(21) Anmeldenummer: 24196873.4
(22) Anmeldetag: 28.08.2024
(51) Int. Cl.: H01M 4/04, H01M 4/139

(54) **VORRICHTUNG UND VERFAHREN ZUM BESCHICHTEN EINER BATTERIEFOLIE**

(71) Anmelder: Siemens Aktiengesellschaft, 80333 München (DE)
(72) Erfinder: Baudisch, Thomas, 86938 Schondorf am Ammersee (DE)
(74) Vertreter: Siemens Patent Attorneys

(57) **Zusammenfassung**

Die Erfindung betrifft eine Vorrichtung (BV) zum Beschichten einer Batteriefolie, umfassend:
- eine Düse (D), die derart eingerichtet ist, ein Beschichtungsmaterial (BM) auf die Batteriefolie (BF) aufzubringen,
- eine erste Einheit (DEV1) zum Verformen der Batteriefolie (BF) und/oder eine zweite Einheit (DEV2) zum Verformen einer Düsenform der Düse (D),
und
- einen Regler (R), der die erste Einheit (DEV1) zum Verformen der Batteriefolie und/oder die zweite Einheit (DEV2) zum Verformen der Düsenform ansteuert,
wobei die Batteriefolie (BF) gemäß einem ersten vorgegebenen Verformungsparameter und/oder die Düsenform gemäß einem zweiten vorgegebenen Verformungsparameter derart durch die jeweilige Einheit zum Verformen (DEV1, DEV2) verformt wird, dass das Beschichtungsmaterial (BM) nach dem Aufbringen senkrecht zu einer Beschichtungsrichtung eine vorgegebene Schichtdicke (MD) auf der Batteriefolie aufweist.

Insbesondere kann der erste und/oder zweite Verformungsparameter mittels einer Simulation des Beschichtungsprozesses optimiert werden.

## Beschreibung

Die Erfindung betrifft eine Vorrichtung und ein Verfahren zum Beschichten einer Batteriefolie.

Die Herstellung von Batterien, wie z.B. Lithium-Ionen-Batterien, basiert auf der Beschichtung der Batterieelektroden. Bei der Elektrodenbeschichtung wird ein Beschichtungsmaterial, sog. Aufschlämmung (engl. Slurry), auf eine Folie aufgetragen, um eine möglichst homogene Schicht mit möglichst konstanter Schichtdicke aus aktivem Material zu erzeugen. Die Beschichtung kann beispielsweise durch ein Düsenbeschichtungsverfahren erfolgen. Hierbei wird das Beschichtungsmaterial über einer Düse auf die Folie aufgebracht. Dabei fließt das Beschichtungsmaterial kontinuierlich aus der Düse, wobei die Folie unter der Düse durchläuft. Beim Auftragen des viskosen Materials auf die Folie kann es hierbei aufgrund der Oberflächenspannung der Aufschlämmung zu unerwünschten Unregelmäßigkeiten in der Schichtdicke der Beschichtung kommen, wie z.B. zu Überhöhungen im Randbereich der Batteriefolie. Eine inhomogene Schichtdicke der Folienbeschichtung kann einen negativen Effekt auf die Leitfähigkeit der Elektrode haben.

Es ist daher eine Aufgabe der Erfindung, eine Beschichtung der Folie mit möglichst konstanter Dicke der Aufschlämmung zu ermöglichen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zum Beschichten einer Batteriefolie, umfassend:
- eine Düse, die derart eingerichtet ist, ein Beschichtungsmaterial auf die Batteriefolie aufzubringen,
- eine erste Einheit zum Verformen der Batteriefolie und/oder eine zweite Einheit zum Verformen einer Düsenform der Düse,
   und
- einen Regler, der die erste Einheit zum Verformen der Batteriefolie und/oder die zweite Einheit zum Verformen der Düsenform ansteuert,
wobei die Batteriefolie gemäß einem ersten vorgegebenen Verformungsparameter und/oder die Düsenform gemäß einem zweiten vorgegebenen Verformungsparameter derart durch die jeweilige Einheit zum Verformen verformt wird, dass das Beschichtungsmaterial nach dem

Aufbringen senkrecht zu einer Beschichtungsrichtung eine vorgegebene Schichtdicke auf der Batteriefolie aufweist.

Gemäß einem zweiten Aspekt betrifft die Erfindung ein Verfahren zum Beschichten einer Batteriefolie mit den Verfahrensschritten:
- Verformen der Batteriefolie durch eine erste Einheit zum Verformen, wobei die Batteriefolie gemäß einem ersten vorgegebenen Verformungsparameter derart verformt wird, dass das Beschichtungsmaterial nach dem Aufbringen senkrecht zu einer Beschichtungsrichtung eine vorgegebene Schichtdicke auf der Batteriefolie aufweist,
- und/oder Verformen einer Düsenform einer Düse durch eine zweite Einheit zum Verformen, wobei die Düse derart eingerichtet ist, ein Beschichtungsmaterial auf die Batteriefolie aufzubringen, wobei die Düsenform gemäß einem zweiten vorgegebenen Verformungsparameter derart verformt wird, dass das Beschichtungsmaterial nach dem Aufbringen senkrecht zu einer Beschichtungsrichtung eine vorgegebene Schichtdicke auf der Batteriefolie aufweist,
   und
- Aufbringen eines Beschichtungsmaterials auf die Batteriefolie.

Es ist ein Vorteil der vorliegenden Erfindung, dass eine Beschichtung der Batteriefolie mit einer innerhalb einer vorgegebenen Toleranz einheitlichen Schichtdicke/Schichtstärke erzielt werden kann und Unregelmäßigkeiten in der Schichtdicke vermieden werden bzw. diesen entgegengewirkt werden kann. So wird insbesondere Ausschuss vermieden und/oder die Qualität der Folienbeschichtung verbessert.

In einer vorteilhaften Ausführungsform kann die Vorrichtung eine Simulationseinheit umfassen, die derart eingerichtet ist, mittels eines computergestützten Simulationsmodells die Beschichtung der Batteriefolie mit dem Beschichtungsmaterial in Abhängigkeit des vorgegebenen ersten und/oder zweiten Verformungsparameters computergestützt zu simulieren.

Somit kann der Beschichtungsprozess computergestützt simuliert werden. Als Simulationsergebnis kann u.a. eine zu erwartende Schichtdicke des Beschichtungsmaterials ausgegeben werden. Der Beschichtungsprozess kann ohne langwierigen, manuellen Einstellprozess der Regelparameter von Beginn an durchgeführt werden. Damit wird insbesondere Ausschuss vermieden. Außerdem kann mit dem Einsatz einer solchen Simulation die Zeit für die Inbetriebnahme der Beschichtungsvorrichtung verkürzt werden.

In einer weiteren vorteilhaften Ausführungsform kann die Vorrichtung eine Optimierungseinheit umfassen, die derart eingerichtet ist, einen optimierten ersten und/oder zweiten Verformungsparameter mittels der Simulation der Beschichtung zu bestimmen und die optimierten Verformungsparameter dem Regler bereitzustellen.

Ein Optimierungsziel kann beispielsweise eine vorgegebene homogene Schichtdicke der Beschichtung sein.

In einer weiteren Ausführungsform kann das computergestützte Simulationsmodell ein 3D CFD-Simulationsmodell ("Computational Fluid Dynamics"-Simulation) sein.

Somit können insbesondere die Fließeigenschaften des Beschichtungsmaterials computergestützt simuliert werden.

In einer alternativen Ausführungsform kann die Vorrichtung einen Sensor und eine Analyseeinheit umfassen, wobei der Sensor zur kontinuierlichen Messung der Schichtdicke des Beschichtungsmaterials auf der Batteriefolie senkrecht zur Beschichtungsrichtung eingerichtet ist und die Analyseeinheit dazu eingerichtet ist, den ersten und/oder den zweiten Verformungsparameter anhand der gemessenen Schichtdicke zu ermitteln.

Damit kann während des Beschichtungsbetriebs eine Anpassung der Verformung der Düsenform und/oder der Batteriefolie vorgenommen werden.

In einer Ausführungsform kann der erste und/oder der zweite Verformungsparameter auf Basis einer künstlichen Intelligenz ermittelt werden, wobei die künstliche Intelligenz darauf trainiert ist, in Abhängigkeit einer Schichtdicke senkrecht zur Beschichtungsrichtung und/oder eines Beschichtungsparameters einen ersten und/oder zweiten Verformungsparameter zu bestimmen.

Dies ermöglicht insbesondere eine schnelle Regelung des Beschichtungsprozesses.

In einer Ausführungsform kann der erste Verformungsparameter eine Verformung einer Batteriefolie.

Insbesondere bestimmt der erste Verformungsparameter eine Verformung in einem definierten Randbereich der Batteriefolie.

In einer Ausführungsform kann der zweite Verformungsparameter eine Verformung eines Querschnitts einer Düsenaustrittsfläche der Düse bestimmen.

Ausführungsbeispiele der Erfindung sind in den Zeichnungen beispielhaft dargestellt und werden anhand der nachfolgenden Beschreibung näher erläutert. Es zeigen:
- Fig. 1A-C:: eine Beschichtungsvorrichtung aus dem Stand der Technik;
- Fig. 2A-B:: ein erstes Ausführungsbeispiel der erfindungsgemäßen Vorrichtung zum Beschichten einer Batteriefolie;
- Fig. 3:: ein zweites Ausführungsbeispiel der erfindungsgemäßen Vorrichtung zum Beschichten einer Batteriefolie; und
- Fig. 4:: ein Ausführungsbeispiel des erfindungsgemäßen Verfahrens zum Beschichten einer Batteriefolie.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

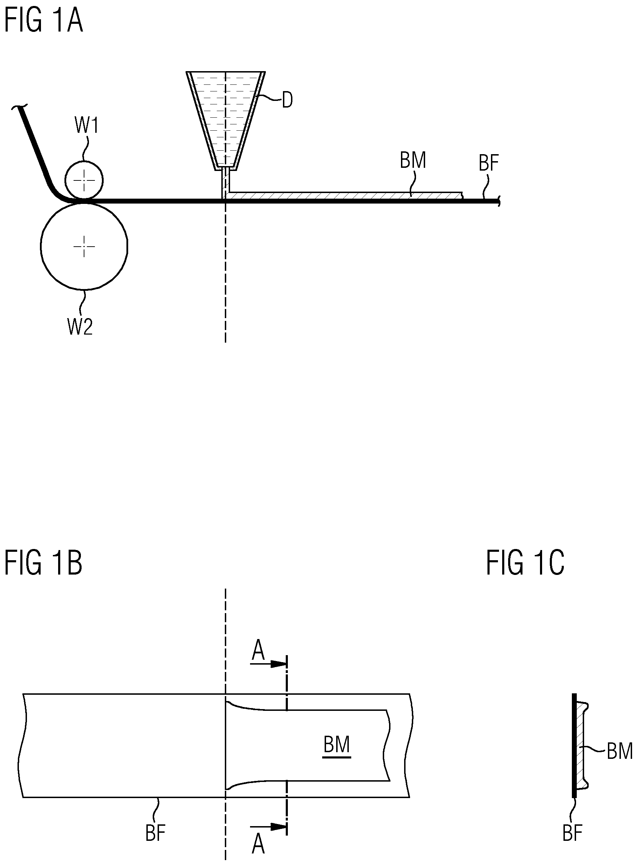

Figur 1 zeigt den Stand der Technik. Figur 1A zeigt im Querschnitt entlang der Beschichtungsrichtung eine Beschichtungsvorrichtung für Batteriefolien aus dem Stand der Technik. Die Beschichtungsvorrichtung umfasst mindestens zwei Walzen W1, W2, zwischen denen eine Batteriefolie BF durchgeführt wird. Nachgelagert umfasst die Beschichtungsvorrichtung eine Düse D, die ein Beschichtungsmaterial BM auf der Beschichtungsfolie aufbringt. Figur 1B zeigt eine Draufsicht der Batteriefolie nach dem Auftragen des Beschichtungsmaterials. Figur 1C zeigt einen Querschnitt senkrecht zur

Längsrichtung der Batteriefolie BF, entlang der Schnittachse A-A in Fig. 1B. Beim Auftragen des Beschichtungsmaterials BM auf die Batteriefolie BF durch eine bekannte Beschichtungsvorrichtung können Unregelmäßigkeiten im Beschichtungsmaterial BM, insbesondere Erhöhungen am Rand der Beschichtungsfolie BF, auftreten.

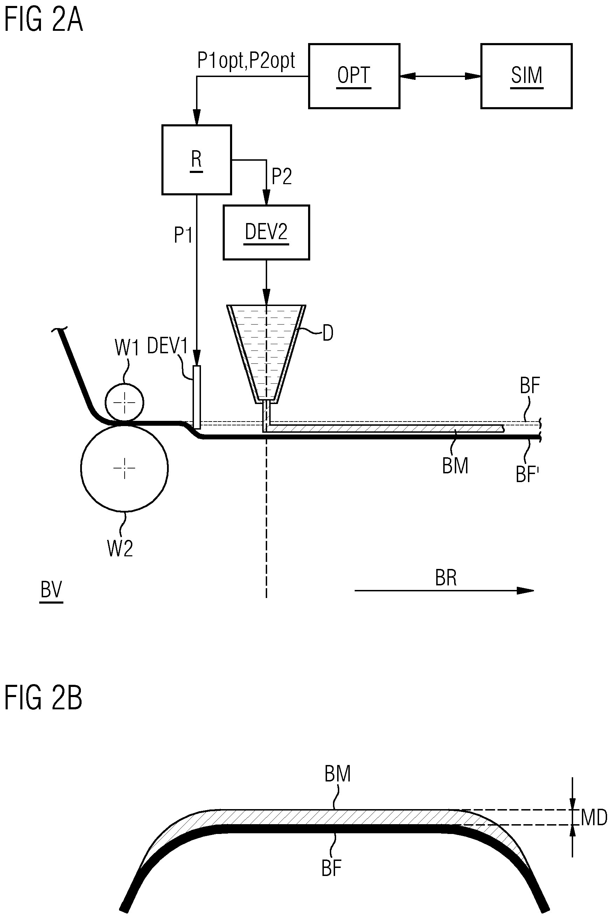

Figur 2 zeigt ein erstes Ausführungsbeispiel einer erfindungsgemäßen Vorrichtung BV zum Beschichten einer Batteriefolie. Die Erfindung kann insbesondere auch für Beschichtungen von Folien anderer Art genutzt werden, wobei eine Folie mit einem zähflüssigen Material beschichtet wird.

Die Beschichtungsvorrichtung BV umfasst vorzugsweise mindestens zwei Walzen W1, W2, zwischen denen eine Batteriefolie BF durchgeführt wird. Die Beschichtungsvorrichtung BV umfasst weiter mindestens eine Düse D, die dazu eingerichtet ist, Beschichtungsmaterial BM auf der Beschichtungsfolie BF aufzubringen. Die Düse ist in der Beschichtungsvorrichtung BV vorzugsweise den Walzen W1, W2 nachgelagert. Das Beschichtungsmaterial BM weist nach der Beschichtung durch die Düse D eine Schichtdicke MD senkrecht zur Beschichtungsrichtung BR auf. Die Beschichtungsrichtung BR in Figur 2A ist durch einen Pfeil dargestellt. Die Schichtdicke MD ist somit insbesondere als Schichtdicke senkrecht zur Oberfläche der Batteriefolie BF oder parallel zur Oberfläche der Batteriefolie und jeweils senkrecht zur Beschichtungsrichtung BR zu verstehen.

Insbesondere kann es beim Auftragen des Beschichtungsmaterials BM durch die Düse D aufgrund der Zähigkeit und der Oberflächenspannung des Beschichtungsmaterials BM zu Unregelmäßigkeiten, wie z.B. Erhöhungen im Randbereich (d.h. variable Schichtdicke senkrecht zur Folienoberfläche) und/oder unterschiedliche Schichtbreiten des Beschichtungsmaterials BM quer zur Beschichtungsrichtung kommen (vgl. Fig. 1). Um dies zu vermeiden, umfasst die erfindungsgemäße Beschichtungsvorrichtung BV eine erste Einheit DEV1 zum Verformen der Batteriefolie BF und/oder eine zweite Einheit DEV2 zum Verformen einer Düsenform der Düse D. Die Verformungseinheiten DEV1, DEV2 werden jeweils über einen Regler R angesteuert.

Der Regler R steuert die erste Einheit DEV1 zum Verformen der Batteriefolie BF in Abhängigkeit eines vorgegebenen ersten Verformungsparameters P1 an, so dass die Batteriefolie BF gemäß dem ersten vorgegebenen Verformungsparameter P1 verformt wird, so dass das Beschichtungsmaterial BM nach dem Aufbringen senkrecht zur Beschichtungsrichtung BR eine vorgegebene Schichtdicke MD auf der Batteriefolie aufweist. Die erste Einheit DEV1 zum Verformen der Batteriefolie BF ist vorzugsweise in der Beschichtungsvorrichtung BV vor der Düse angeordnet, so dass eine Verformung der Batteriefolie BF zeitlich vor der Beschichtung erfolgt.

Vorzugsweise wird die Batteriefolie BF lediglich lokal in einem vorgegebenen Abschnitt verformt BF`, um Unregelmäßigkeiten beim Auftragen des Beschichtungsmaterials BM in diesem Abschnitt auszugleichen. Beispielsweise wird die Batteriefolie BF quer zur Beschichtungsrichtung BR gebogen, so dass die Ränder der Batteriefolie in Bezug auf die Düse D nach unten bzw. oben zeigen, wie in Figur 1B gezeigt. Dies verlängert bzw. verkürzt lokal den Abstand zwischen der Düse D und der Batteriefolie BF, so dass das Beschichtungsmaterial BM beim Auftragen auseinandergezogen oder gestaucht wird. Dies ergibt eine verringerte oder vergrößerte Schichtdicke.

Die erste Einheit DEV1 zum Verformen der Batteriefolie BF kann beispielsweise wie folgt ausgestaltet sein. Zum Verformen der Batteriefolie BF können zum Beispiel ein oder mehrere Stempel DEV1 der Düse vorgelagert sein. Die Stempel DEV1 können beispielsweise unterhalb der Folie BF angeordnet sein. Beispielsweise sind die Stempel in einer Reihe quer zur Beschichtungsrichtung BR angeordnet. Die Stempel können in der Höhe senkrecht zur Folienoberfläche bewegt werden und so die Oberfläche der Folie punktuell derart deformieren BF`, dass beim Auftragen der Beschichtungsmasse beispielsweise keine Erhöhung des Materials entsteht. In anderen Worten, die derart verformte Folienoberfläche BF' wird unter der Düse D durchgeführt. Das Material BM trifft auf die verformte Folienoberfläche, so dass etwaige Erhöhungen oder Vertiefungen im aufgebrachten Material BM ausgeglichen werden können. Der erste Verformungsparameter P1 kann insbesondere eine Positionierung eines Stempels DEV1 umfassen.

Der Regler R steuert außerdem oder alternativ die zweite Einheit DEV2 zum Verformen der Düsenform der Düse D, wobei die Düsenform gemäß einem zweiten vorgegebenen Verformungsparameters P2 derart durch die Einheit DEV2 zum Verformen der Düsenform verformt wird, dass das Beschichtungsmaterial BM durch die derart verformte Düse nach dem Aufbringen senkrecht zur Beschichtungsrichtung BR eine vorgegebene Schichtdicke MD auf der Batteriefolie BF aufweist.

Zum Verformen der Düsenform ist als zweite Einheit zum Verformen DEV2 beispielsweise ein Aktuator, wie z.B. ein Piezoaktuator, vorgesehen, der Zug bzw. Druck auf die Düsenform ausüben kann und so die Düse und den Düsenausfluss beeinflussen kann.

Folglich kann die Folie/Folienoberfläche gezielt verformt werden bzw. die Düsenform so gewählt werden, dass ein homogenes Auftragen des Beschichtungsmaterials mit einer vorgegebenen Beschichtungsdicke erzielt wird. Durch das Verformen der Düsenform wird der Volumenstrom über den Düsenquerschnitt verändert, so dass eine verringerte oder vergrößerte Schichtdicke erzielt werden kann.

Der erste Verformungsparameter P1 und/oder der zweite Verformungsparameter P2 werden vorzugsweise vorab bereitgestellt und über dem Regler R der jeweiligen Einheit zum Verformen DEV1, DEV2 übergeben.

Der erste Verformungsparameter P1 bestimmt beispielsweise eine Verformung in einem definierten Randbereich der Batteriefolie. Insbesondere kann der erste Verformungsparameter P1 eine Position eines Stempels umfassen.

Der zweite Verformungsparameter P2 bestimmt beispielsweise eine Verformung eines Querschnitts einer Düsenaustrittsfläche der Düse D. Beispielsweise gibt der zweite Verformungsparameter P2 an, mit welchem Druck und an welcher Stelle der Düse der Aktuator ansetzen soll.

Vorzugsweise wird der erste und/oder der zweite Verformungsparameter P1, P2, derart gewählt, dass das Beschichtungsmaterial BM nach dem Aufbringen senkrecht zu der Beschichtungsrichtung BR eine Schichtdicke MD auf der Oberfläche der Batteriefolie BF aufweist, wobei die Schichtdicke MD in einem vorgegebenen Bereich der Oberfläche der Batteriefolie BF einen Wert innerhalb eines vorgegebenen Toleranzbereichs aufweist. In anderen Worten, der erste und/oder der zweite Verformungsparameter P1, P2, sind vorzugsweise abhängig von einer vorgegebenen Schichtdicke MD des Beschichtungsmaterials BM.

Vorzugsweise können die erste Verformungseinheit DEV1 und/oder die zweite Verformungseinheit DEV2 dynamisch vom Regler R angesteuert werden, so dass bei Parameteränderungen des Beschichtungsprozesses, wie z.B. Änderungen der Umgebungstemperatur, eine entsprechende Verformung der Folie und/oder der Düse angepasst werden kann.

Die Beschichtungsvorrichtung BV kann insbesondere eine Simulationseinheit SIM umfassen, die derart eingerichtet ist, mittels eines computergestützten Simulationsmodells des Beschichtungsprozesses in der Beschichtungsvorrichtung BV die Beschichtung der Batteriefolie BF mit dem Beschichtungsmaterial BM in Abhängigkeit des vorgegebenen ersten Verformungsparameters P1 und/oder zweiten Verformungsparameters P2 computergestützt zu simulieren. Das computergestützte Simulationsmodell kann das Fließen des Beschichtungsmaterials auf die sich bewegende, ggf. verformte, Batteriefolie beschreiben. Das Simulationsmodell umfasst vorzugsweise ein CFD-Simulationsmodell. Vorzugsweise bildet die Computersimulation die Beschichtung der Batteriefolie BF in Abhängigkeit des ersten Verformungsparameters P1 und/oder des zweiten Verformungsparameters P2, sowie weiteren vorgegebenen Beschichtungsparametern, wie z.B. Drehzahl der Walzen, Temperatur, Beschichtungsmaterialeigenschaften, Düsenform, etc., ab. Somit kann mit der Computersimulation ermittelt werden, welche Schichtdicke MD des Beschichtungsmaterials für eine vorgegebene Einstellung der Beschichtungsvorrichtung BV zu erwarten ist. Außerdem kann eine Positionierung der Stempel DEV1 vorab mittels CFD-Simulation ermittelt werden.

Die Beschichtungsvorrichtung BV kann weiter eine Optimierungseinheit OPT umfassen, die derart eingerichtet ist, einen optimierten ersten Verformungsparameter P1 und/oder zweiten Verformungsparameter P2 mittels der Simulation der Beschichtung zu bestimmen und die optimierten Verformungsparameter P1opt, P2opt dem Regler R bereitzustellen. So kann beispielsweise mittels des Optimierungsalgorithmus ein eine optimale Stellung/Position jedes einzelnen Stempels DEV1 bestimmt werden.

So kann die Beschichtung für verschiedene Verformungsparameter computergestützt simuliert und jeweils ein Simulationsergebnis, das zumindest eine resultierende Schichtdicke des Beschichtungsmaterials umfasst, ausgegeben werden. Daraus kann ein optimierter erster und/oder zweiter Verformungsparameter P1opt, P2opt bestimmt werden. Der optimierte erste Verformungsparameter P1opt und/oder der optimierte zweite Verformungsparameter P2opt können anschließend dem Regler R zur Regelung des Beschichtungsprozesses übergeben werden.

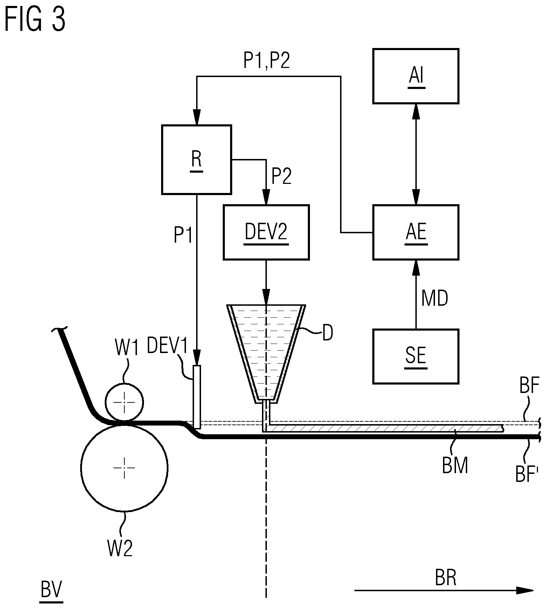

Figur 3 zeigt ein weiteres Ausführungsbeispiel der erfindungsgemäßen Vorrichtung BV zum Beschichten einer Batteriefolie BF. Analog zur Figur 1A, zeigt Figur 2 eine Beschichtungsvorrichtung BV schematisch im Querschnitt entlang der Beschichtungsrichtung BR. Die Beschichtungsvorrichtung BV umfasst vorzugsweise mindestens zwei Walzen W1, W2, zwischen denen eine Batteriefolie BF durchgeführt wird, sowie mindestens eine Düse D zur Beschichtung der Batteriefolie BF. Das Beschichtungsmaterial BM weist nach der Beschichtung durch die Düse D eine Schichtdicke MD senkrecht zur Beschichtungsrichtung BR auf.

Die Beschichtungsvorrichtung BV umfasst weiter eine erste Einheit DEV1 zum Verformen der Batteriefolie BF/BF'. Zusätzlich oder alternativ kann die Beschichtungsvorrichtung BV noch eine zweite Einheit DEV2 zum Verformen einer Düsenform der Düse D umfassen. Die beiden Einheiten zum Verformen DEV1, DEV2 werden durch einen Regler R in Abhängigkeit jeweiliger Verformungsparameter P1, P2 gesteuert, wie anhand Figur 1 erläutert.

Die Beschichtungsvorrichtung BV umfasst außerdem einen Sensor SE, wie z.B. einen Scanner oder Liniensensor, mit dem die Schichtdicke MD des Beschichtungsmaterials BM senkrecht zur Beschichtungsrichtung auf der Batteriefolie BF ermittelt werden kann. Dies ermöglicht eine Messung der Schichtdicke MD während des Betriebs der Beschichtungsvorrichtung BV. Die gemessene Schichtdicke MD wird einer Analyseeinheit AE der Beschichtungsvorrichtung BV übergeben. Die Analyseeinheit AE ist dazu eingerichtet, anhand der gemessenen Schichtdicke den ersten und/oder den zweiten Verformungsparameter P1, P2 zu ermitteln. Beispielsweise kann damit eine Position eines Stempels und/oder die Düsenform anhand der ermittelten Schichtdicke MD bestimmt werden.

Der erste und/oder der zweite Verformungsparameter P1, P2 können auch mit Hilfe einer künstlichen Intelligenz Al ermittelt werden. Beispielsweise umfasst die Beschichtungsvorrichtung BV ein Recheneinheit zum Ausführen der künstlichen Intelligenz AI. Die künstliche Intelligenz kann beispielsweise ein künstliches neuronales Netz sein. Die künstliche Intelligenz AI ist vorzugsweise anhand von Trainingsdaten darauf trainiert, in Abhängigkeit einer ermittelten (z.B. gemessenen oder simulierten) Schichtdicke MD (senkrecht zur Beschichtungsrichtung BR) und/oder in Abhängigkeit eines Beschichtungsparameters, wie z.B. Drehzahl der Walzen, Abstand zwischen Düse und Folie, Verarbeitungstemperatur, Beschichtungsmaterialeigenschaften, Düsenform, etc., einen ersten und/oder zweiten Verformungsparameter P1, P2 zu bestimmen.

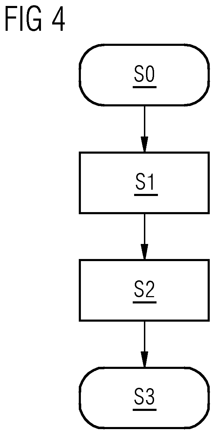

Figur 4 zeigt ein Ausführungsbeispiel eines erfindungsgemäßen Verfahrens zur Beschichtung einer Batteriefolie mit den folgenden Verfahrensschritten:
- Einlesen S0 eines ersten und/oder eines zweiten Verformungsparameters,
- Verformen S1 der Batteriefolie durch eine erste Einheit zum Verformen, die von einem Regler angesteuert wird, wobei die Batteriefolie gemäß dem ersten Verformungsparameter derart verformt wird, dass das Beschichtungsmaterial nach dem Aufbringen senkrecht zu einer Beschichtungsrichtung eine vorgegebene Schichtdicke auf der Batteriefolie aufweist,
- und/oder Verformen S2 einer Düsenform einer Düse durch eine zweite Einheit zum Verformen der Düsenform, wobei die zweite Einheit durch den Regler angesteuert wird, wobei die Düse derart eingerichtet ist, ein Beschichtungsmaterial auf die Batteriefolie aufzubringen, wobei die Düsenform gemäß dem zweiten Verformungsparameter derart verformt wird, dass das Beschichtungsmaterial nach dem Aufbringen senkrecht zu einer Beschichtungsrichtung eine vorgegebene Schichtdicke auf der Batteriefolie aufweist,
   und
- Aufbringen S3 eines Beschichtungsmaterials auf die Batteriefolie.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (BV) zum Beschichten einer Batteriefolie,
umfassend:
- eine Düse (D), die derart eingerichtet ist, ein Beschichtungsmaterial (BM) auf die Batteriefolie (BF) aufzubringen,
- eine erste Einheit (DEV1) zum Verformen der Batteriefolie (BF) und/oder eine zweite Einheit (DEV2) zum Verformen einer Düsenform der Düse (D),
und
- einen Regler (R), der die erste Einheit (DEV1) zum Verformen der Batteriefolie und/oder die zweite Einheit (DEV2) zum Verformen der Düsenform ansteuert,
wobei die Batteriefolie (BF) gemäß einem ersten vorgegebenen Verformungsparameter (P1) und/oder die Düsenform gemäß einem zweiten vorgegebenen Verformungsparameter (P2) derart durch die jeweilige Einheit zum Verformen (DEV1, DEV2) verformt wird, dass das Beschichtungsmaterial (BM) nach dem Aufbringen senkrecht zu einer Beschichtungsrichtung eine vorgegebene Schichtdicke (MD) auf der Batteriefolie aufweist.

2. Vorrichtung nach Anspruch 1, weiter umfassend eine Simulationseinheit (SIM), die derart eingerichtet ist, mittels eines computergestützten Simulationsmodells die Beschichtung der Batteriefolie (BF) mit dem Beschichtungsmaterial (BM) in Abhängigkeit des vorgegebenen ersten Verformungsparameters (P1) und/oder zweiten Verformungsparameters (P2) computergestützt zu simulieren.

3. Vorrichtung nach Anspruch 2, weiter umfassend eine Optimierungseinheit (OPT), die derart eingerichtet ist, einen optimierten ersten Verformungsparameter (P1) und/oder zweiten Verformungsparameter (P2) mittels der Simulation der Beschichtung zu bestimmen und die optimierten Verformungsparameter (P1opt, P2opt) dem Regler (R) bereitzustellen.

4. Vorrichtung nach einem der vorhergehenden Ansprüche, wobei das computergestützte Simulationsmodell ein 3D CFD-Simulationsmodell ist.

5. Vorrichtung nach Anspruch 1, weiter umfassend einen Sensor (SE) zur kontinuierlichen Messung der Schichtdicke (MD) des Beschichtungsmaterials (BM) auf der Batteriefolie (BF) senkrecht zur Beschichtungsrichtung und einer Analyseeinheit (AE), die dazu eingerichtet ist, den ersten und/oder den zweiten Verformungsparameter anhand der gemessenen Schichtdicke (MD) zu ermitteln.

6. Vorrichtung nach einem der vorhergehenden Ansprüche, wobei der erste und/oder der zweite Verformungsparameter auf Basis einer künstlichen Intelligenz (AI) ermittelt wird, wobei die künstliche Intelligenz (AI) darauf trainiert ist, in Abhängigkeit einer Schichtdicke (MD) senkrecht zur Beschichtungsrichtung und/oder eines Beschichtungsparameters einen ersten und/oder zweiten Verformungsparameter zu bestimmen.

7. Vorrichtung nach einem der vorhergehenden Ansprüche, wobei der erste Verformungsparameter eine Verformung der Batteriefolie.

8. Vorrichtung nach einem der vorhergehenden Ansprüche, wobei der zweite Verformungsparameter eine Verformung eines Querschnitts einer Düsenaustrittsfläche der Düse bestimmt.

9. Verfahren zum Beschichten einer Batteriefolie mit den Verfahrensschritten:
- Verformen (S1) der Batteriefolie durch eine erste Einheit zum Verformen (DEV1), wobei die Batteriefolie gemäß einem ersten vorgegebenen Verformungsparameter derart verformt wird, dass das Beschichtungsmaterial nach dem Aufbringen senkrecht zu einer Beschichtungsrichtung eine vorgegebene Schichtdicke auf der Batteriefolie aufweist,
- und/oder Verformen (S2) einer Düsenform einer Düse (D) durch eine zweite Einheit zum Verformen (DEV2), wobei die Düse (D) derart eingerichtet ist, ein Beschichtungsmaterial auf die Batteriefolie aufzubringen, wobei die Düsenform gemäß einem zweiten vorgegebenen Verformungsparameter derart verformt wird, dass das Beschichtungsmaterial nach dem Aufbringen senkrecht zu einer Beschichtungsrichtung eine vorgegebene Schichtdicke auf der Batteriefolie aufweist,
und
- Aufbringen (S3) eines Beschichtungsmaterials auf die Batteriefolie.
